# EUROPÄISCHE PATENTSCHRIFT

(11) **EP 0 928 236 B1**
(45) Veröffentlichungstag und Bekanntmachung des Hinweises auf die Patenterteilung: **26.06.2002**
(21) Anmeldenummer: 97909168.3
(22) Anmeldetag: 19.09.1997
(51) Int. Cl.: B23Q 7/14, B23Q 16/04

(54) **VORRICHTUNG ZUM AUTOMATISCHEN BELADEN VON WERKSTÜCKPALETTEN**
DEVICE FOR AUTOMATICALLY LOADING WORKPIECE PALETTES
DISPOSITIF DE CHARGEMENT AUTOMATIQUE DE PALETTES DE PIECES

(30) Priorität: 26.09.1996 DE 29616751 U
(43) Veröffentlichungstag der Anmeldung: 14.07.1999
(73) Patentinhaber: Hermann Spicher GmbH, 51069 Köln (DE)
(72) Erfinder: SPICHER, Hermann, D-51429 Bergisch Gladbach (DE)
(74) Vertreter: Lippert, Hans-Joachim, Dipl.-Ing.
(86) Internationale Anmeldenummer: DE9702141
(87) Internationale Veröffentlichungsnummer: WO9813172

(56) Entgegenhaltungen:
- EP-A- 0 416 446
- CH-A- 514 397
- DE-U- 29 616 751
- US-A- 4 693 370
- US-A- 4 927 314

## Beschreibung

Die Erfindung betrifft eine Vorrichtung zum automatischen Handhaben von empfindlichen Werkstücken, umfassend mindestens eine Werkstückpalette zur Aufnahme der Werkstücke in einem Aufnahmebereich, wobei die Werkstückpalette gitter- und/oder kammartig angeordnete vorzugsweise gerade Stäbe und zwischen den Stäben liegende freie Zwischenräume aufweist, mindestens einen Werkstückgreifer zum Ablegen der Werkstücke auf einer dafür vorgesehenen Fläche, und einen Palettengreifer zur Halterung der Werkstückpalette.

Derartige Werkstückpaletten werden beispielsweise zur Aufnahme von Metallteilen verwendet, die für eine Wärmebehandlung in einen Wärmebehandlungsofen eingesetzt, für eine galvanische Oberflächenbehandlung in ein Galvanik-Bad eingesetzt oder zum Fördern durch einen Durchlaufofen auf spezielle Förderanlagen aufgesetzt werden. Die Werkstückpaletten bestehen üblicherweise aus einem speziellen Stahl, der eine entsprechende Warmfestigkeit besitzt. Besonders bei der Anwendung solcher Werkstückpaletten in Wärmebehandlungsöfen kann durch Aufkohlung des Stahls eine starke Verlängerung der Werkstückpalette auftreten. Zusätzlich treten thermische Spannungen auf, die einen starken Verzug der Werkstückpalette hervorrufen.

Das Beladen der Werkstückpaletten mit den Werkstücken erfolgt entweder manuell oder maschinell mittels einer geeigneten Handhabungsmaschine. Werden die empfindlichen Werkstücke in einer Akkordtätigkeit von Hand auf die Werkstückpaletten aufgelegt, so werden diese häufig nicht schonend und mit der nötigen Sorgfalt gehandhabt. Kleine Beschädigungen, die beispielsweise durch ein Fallenlassen des Werkstücks auf die Werkstückpalette entstehen können, führen dabei bereits zu Ausschuß.

Eine direkte maschinelle Beladung der Werkstückpaletten, bei der die Werkstücke an einer vorgegebenen Stelle und in einer festgelegten Höhe abgelegt werden, ist ebenfalls schwierig. Ein Loslassen eines Werkstücks in einer vorgegebenen Position führt bei der einen Werkstückpalette dazu, daß das Werkstück auf diese herab fällt und bei einer anderen dazu, daß es auf diese aufgedrückt wird. In beiden Fällen werden empfindliche Werkstücke sehr leicht durch hartes Auftreffen oder festes Aufdrücken auf die Werkstückpalette beschädigt.

Der Erfindung liegt die Aufgabe zugrunde eine einfache und kostengünstige Vorrichtung zu schaffen, mit der Werkstückpaletten automatisch, schnell und präzise beladen werden können und empfindliche Werkstücke schonend handhabbar sind.

Erfindungsgemäß wird die Aufgabe dadurch gelöst, daß wenigstens eine Positioniereinrichtung mit Materialausnehmungen vorgesehen ist, in die die Stäbe der Werkstückpalette absenkbar sind, daß die Positioniereinrichtung eine Positionierfläche zum Ablegen der Werkstücke mittels des Werkstückgreifers aufweist, und daß der Palettengreifer derart ausgebildet ist, daß die leere Werkstückpalette von dem Palettengreifer aus einer oberhalb der leeren Positionierfläche liegenden Absenkposition durch die Ebene der Positionierfläche hindurch in eine unterhalb der Positionierfläche liegende Aufnahmeposition derart absenkbar ist, daß der Aufnahmebereich der Werkstückpalette tiefer liegt als die Positionierfläche, und nach dem Ablegen der Werkstücke auf die unter die Positionierfläche abgesenkte Werkstückpalette die Werkstückpalette aus der Aufnahmeposition anhebbar ist, so daß die Werkstücke mittels der Werkstückpalette von der Positionierfläche abgehoben werden.

Die Positionierfläche der Positioniereinrichtung dient vorteilhaft als Hilfsebene, auf welche empfindliche Werkstücke fallengelassen oder aufgedrückt werden können, ohne daß diese dadurch beschädigt werden. Der Palettengreifer arbeitet vorzugsweise maschinell und ist programmgesteuert. Er kann beliebig langsam aus der Aufnahmeposition angehoben werden. Dadurch können die Werkstücke sehr schonend mit dem Aufnahmebereich der Werkstückpalette von der Positionierfläche der Positioniereinrichtung abgehoben werden. Die Werkstückpaletten mit den Werkstücken werden dann von dem Palettengreifer beispielsweise auf eine Förderanlage eines Durchgangsofens oder eine sonstige Zubringereinrichtung für einen folgenden Fertigungsschritt gesetzt. Die verwendeten Werkstückpaletten sind zweckmäßigerweise sowohl leer als auch im beladenen Zustand stapelbar.

Die Positionierfläche der Positioniereinrichtung ist einfacherweise an einem Positionierblock ausgebildet. Dieser Positionierblock weist einfach herstellbare taschenartige Materialausnehmungen auf, in welche die Stäbe der Werkstückpalette absenkbar sind. Selbstverständlich kann die Positioniereinrichtung jede geeignete Konstruktion aufweisen, die eine als Hilfsebene dienende Positionierfläche ergibt.

Um mögliche Beschädigungen der empfindlichen Werkstücke systematisch auszuschließen, besteht der Positionierblock aus weiweichem Material, vorzugsweise aus Kunststoff.

Die Werkstückpaletten können gitterartige Paletten sein, deren Gitterstäbe sich jeweils mit beiden Enden an querverlaufende Stäbe anschließen. Andererseits können auch Paletten mit kammartigen Stäben verwendet werden, deren Stäbe an einem Ende an der Werkstückpalette fest sind und das andere Ende frei ist. Ebenso sind Werkstückpaletten verwendbar, die teilweise gitterartig und teilweise kammartig aufgebaut sind. Je nach der Art der verwendeten Werkstückpaletten richtet sich die Ausbildung der Materialausnehmungen.

Die taschenartigen Materialausnehmungen des Positionierblocks können in der Art von einfach zu fertigenden, ineinander übergehenden Nuten ausgebildet sein. Die Nuten können sich beispielsweise kreuzen, damit gitterartige Paletten in den Positionierblock absenkbar sind. Durch die Zwischenräume zwischen den Gitterstäben treten die verbleibenden Bereiche des Positionierblocks hindurch, welche die Positionierfläche ausbilden.

Die seitlichen Wände der Materialausnehmungen sind einfacherweise im wesentlichen parallel zur Absenk- und Anheberichtung der Werkstückpalette angeordnet.

Vorteilhaft sind die Stäbe der Werkstückpalette allseitig mit einem seitlichen Abstand zu den Wänden der Materialausnehmungen in den Positionierblock absenkbar. Diese Maßnahme erlaubt es, daß selbst stark verzogene Werkstückpaletten noch leicht in die Materialausnehmungen des Positionierblocks absenkbar und wieder daraus anhebbar sind, ohne in dem Positionierblock festzuklemmen.

Werkstückpaletten, die wenigstens einen Haltedorn oder ähnliches mit einer Hinterschneidung aufweisen, können mittels eines Palettengreifers mit wenigstens einem Tragefinger gegriffen werden. Der Palettengreifer greift die Werkstückpalette dann vorteilhafterweise an der vorhandenen Hinterschneidung.

Üblicherweise hängt die von dem Palettengreifer gegriffene Werkstückpalette an dem Palettengreifer und kann ein wenig hin- und herschwingen. Zum Verhindern des Hin- und Herschwingens und zwecks einer guten Halterung in der vorgegebenen Position kann der Palettengreifer zumindest mit einem zusätzlichen Stützfinger versehen sein, mit dem die Palette relativ zum Palettengreifer in einer konstruktiv vorgegebenen Förderposition festlegbar ist.

Der Stützfinger ist zum Festlegen der Werkstückpalette in der vorgegebenen Förderposition zweckmäßigerweise federbelastet und drückt auf die Werkstückpalette. Dadurch zieht einerseits der Tragefinger an der Werkstückpalette andererseits drückt der Stützfinger auf die Werkstückpalette, so daß diese in der vorgegebenen Position festgelegt ist.

Wenn Werkstückpaletten verwendet werden, deren Aufnahmebereiche zur Aufnahme gelochter Werkstücke mit Werkstückaufnahmen in Form von Dornen versehen sind, so ergibt sich das Problem, daß die Positionen der Dorne sich durch die Längenänderung und den Verzug der Werkstückpalette ebenfalls ändern. Die Werkstücke können trotzdem präzise in der vorgegebenen Position, auf dem Positionierblock abgelegt werden. Die Dorne sind in diesem Fall während des Abhebens der Werkstücke nicht zentrisch zu den Löchern der Werkstücke, sondern exzentrisch zu diesen angeordnet. Diese exzentrische Position darf lediglich nicht völlig außerhalb des Öffnungsqueerschnitts des Lochs liegen, damit die Werkstücke auf den Dornen zentrierbar sind. Die Werkstücke werden nicht auf die Dorne fallen gelassen oder auf diese aufgedrückt, sondern durch ein langsames Anheben der Werkstückpalette schonend von der Positionierfläche abgehoben. Eine Beschädigung der Werkstücke bleibt aus.

Selbstverständlich können anstelle der Werkstückpaletten mit Dornen auch solche mit sogenannten Nestern Verwendung finden. Ein Nest ist dabei auf dem Aufnahmebereich einer Werkstückpalette angeordnet und weist einen hervorstehenden Rand auf, der ein Werkstück wenigstens teilweise umschließt, so daß dieses innerhalb des Randes mit ein wenig Luft zum Rand festgelegt ist. In den Nestern sind beliebige Werkstücke aufnehmbar. Insbesondere können damit Werkstück gehandhabt werden, welche keine Löcher aufweisen.

Vorzugsweise stützt sich der Stützfinger gegen das freie Ende eines Dornes ab.

Der Palettengreifer sowie der Werkstückgreifer können an einem Portalladesystem angeordnet sein.

In einer anderen Ausführungsform kommt vorteilhaft ein Roboter zum Eisatz, an welchem der Palettengreifer sowie der Werkstückgreifer angeordnet sind. Ebenso können auch einfache Handlingsysteme anstelle eines Roboters vorgesehen werden.

Als Roboter ist zweckmäßig ein Gelenkroboter vorgesehen, an dessen Gelenkarm ein Mehrgreiferkopf angeordnet ist. Der Mehrgreiferkopf weist zumindest zwei Werkstückgreifer sowie einen Palettengreifer auf. Außerdem kann der Mehrgreiferkopf wenigstens einen weiteren Unterpalettengreifer zur Handhabung von Unterpaletten aufweisen, auf welchen Stapel von beladenen Werkstückpaletten befördert werden.

Nachfolgend ist die Vorrichtung anhand einer Zeichnung beispielsweise dargestellt. Es zeigen:

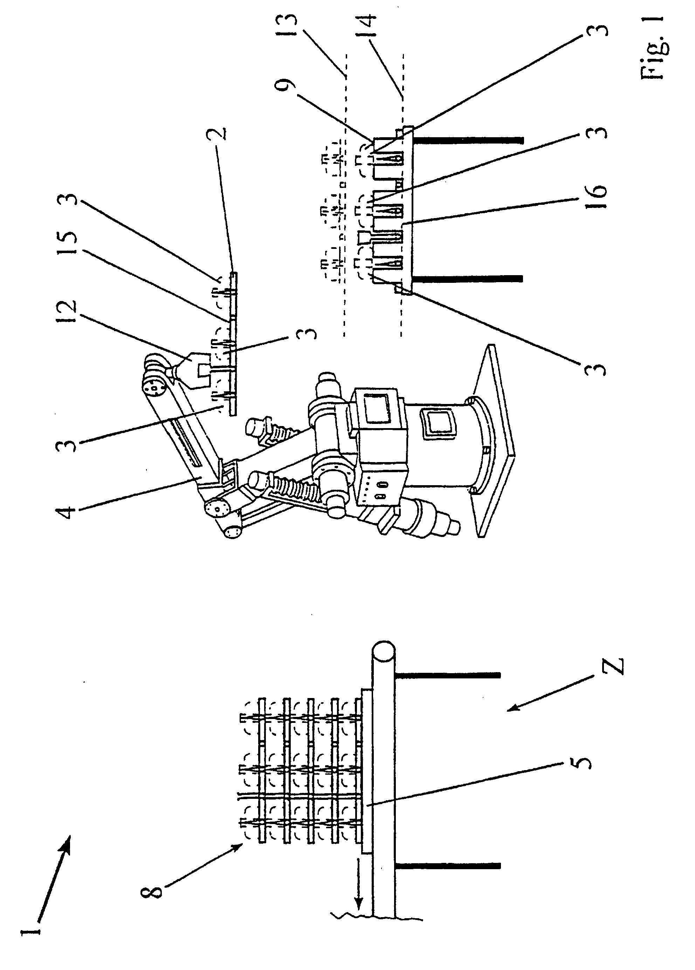

- Fig. 1: eine Vorrichtung zum automatischen Beladen von mit empfindlichen Werkstücken auf Werkstückpaletten,
- Fig. 2: eine Ausführungsform einer Werkstückpalette in Seitenansicht und Draufsicht,

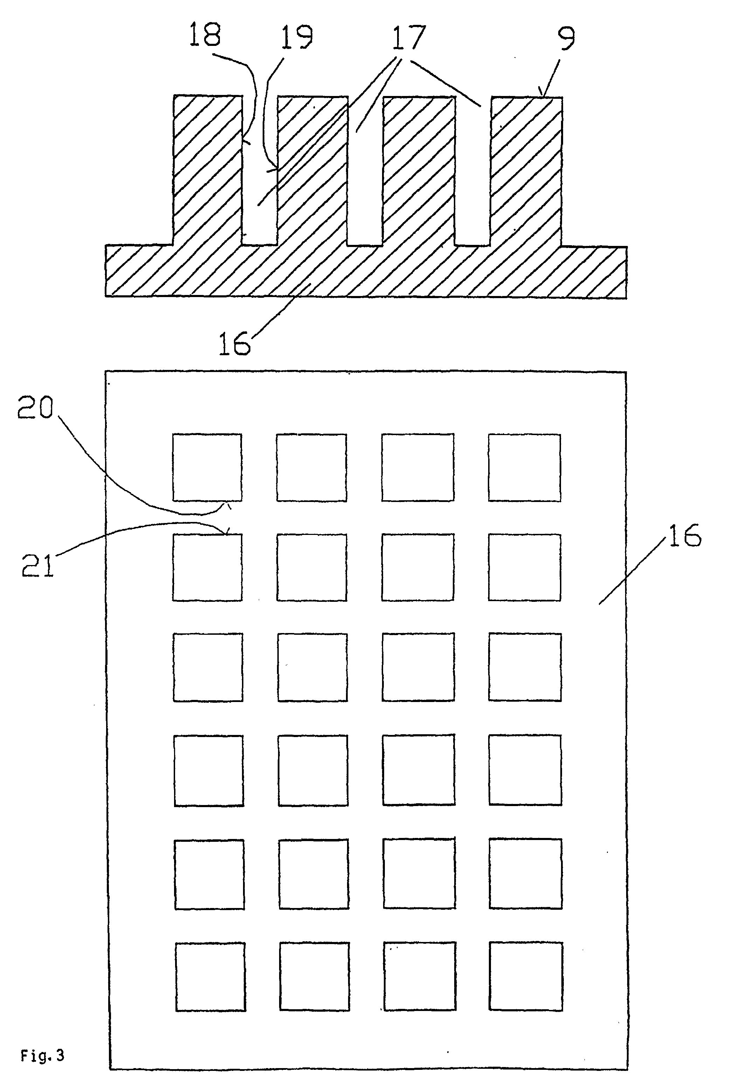

- Fig. 3: eine Ausführungsform eines Positionierblocks, in einer Draufsicht sowie einer Seitenansicht im Schnitt,

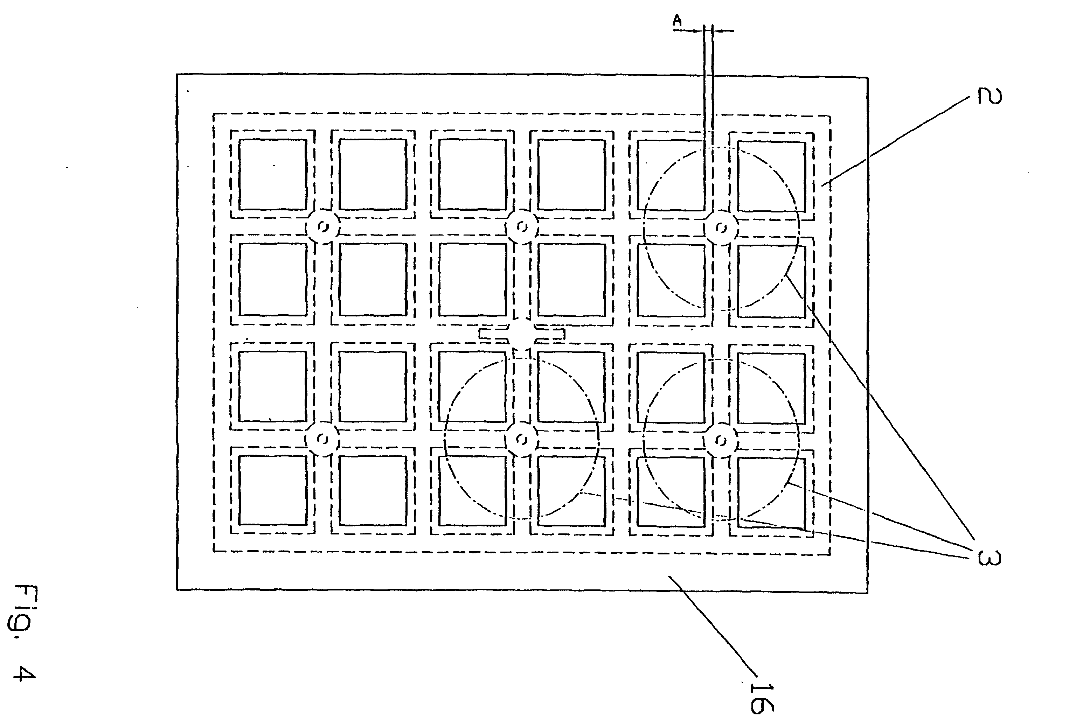

- Fig. 4: den Positionierblock gemäß Fig. 3 sowie die Werkstückpalette gemäß Fig. 2 (gestrichelte Linien), wobei die Werkstückpalette in den Positionierblock abgesenkt ist,
- Fig. 5: eine Seitenansicht eines Positionierblocks mit einer abgesenkten Werkstückpalette (gestrichelte Linien) sowie mit Werkstücken (strichpunktierte Linien) in Aufnahmeposition,
- Fig. 6: eine Seitenansicht eines Positionierblocks mit einer angehobenen Werkstückpalette (gestrichelte Linien) sowie mit Werkstücken (strichpunktierte Linien), die von Dornen der Werkstückpalette zentriert werden,
- Fig. 7: einen Palettengreifer im Schnitt,
- Fig. 8: eine Unteransicht auf einen Mehrgreiferkopf.

Nach der Zeichnung besteht die Vorrichtung 1 zum automatischen Beladen von Werkstückpaletten 2 mit empfindlichen Werkstücken 3, aus einem Gelenkroboter 4, mit dem die Werkstücke 3, die Werkstückpaletten 2 und Unterpaletten 5 handhabbar sind. Die Werkstückpaletten 2 weisen gitterartig angeordnete vorzugsweise gerade Stäbe 6 und zwischen den Stäben 6 liegende freie Zwischenräumen 7 auf. Die Unterpaletten 5 dienen zum Befördern von leeren oder beladenen Werkstückpalettenstapeln 8, beispielsweise zum Ablegen der Werkstückpalettenstapel 8 auf einer Zubringereinrichtung Z, welche die Werkstücke 3 zu der Anlage befördert, die den nächsten Fertigungsschritt ausführt. Außerdem besteht die Vorrichtung 1 aus einer Hilfsfläche in Form einer Positionierfläche 9, auf der die Werkstücke 3 mit Hilfe zweier Werkstückgreifer 10 und 11 ablegbar sind. Die leeren Werkstückpaletten 2 sind von einem Palettengreifer 12 aus einer oberhalb der Positionierfläche 9 liegenden Absenkposition 13 durch die Ebene der Positionierfläche 9 hindurch in eine unterhalb der Positionierfläche 9 liegende Aufnahmeposition 14 absenkbar. Dabei liegt der Aufnahmebereich 15 der Werkstückpaletten 2 tiefer als die Ebene der Positionierfläche 9. Die Werkstücke 3 sind nach dem Absenken der Werkstückpaletten 2 auf die Positionierfläche 9 auflegbar. Nachfolgend ist die Werkstückpalette 2 von dem Palettengreifer 12 aus der Aufnahmeposition 14 anhebbar, wobei die Werkstücke 3 mittels der Werkstückpalette 2 von der Positionierfläche 9 abhebbar sind.

Die Positionierfläche 9 ist an einem Positionierblock 16 ausgebildet, Der Positionierblock 16 weist taschenartige Materialausnehmungen 17 auf. Die taschenartigen Materialausnehmungen 17 des Positionierblocks 16 sind in der Art von ineinander übergehenden Nuten ausgebildet, in welche die Stäbe 6 der Werkstückpalette 2 absenkbar sind. Der Positionierblock 16 besteht in der vorliegenden Ausführungsform aus Kunststoff. Die seitlichen Wände 18, 19 sowie 20 und 21 der Materialausnehmungen 17 sind im wesentlichen parallel zur Absenk- und Anheberichtung der Werkstückpalette 2 angeordnet.

Die Stäbe 6 der Werkstückpalette 2 sind allseitig mit einem seitlichen Abstand A zu den Wänden 18, 19 sowie 20 und 21 der Materialausnehmungen 17 in den Positionierblock 16 absenkbar.

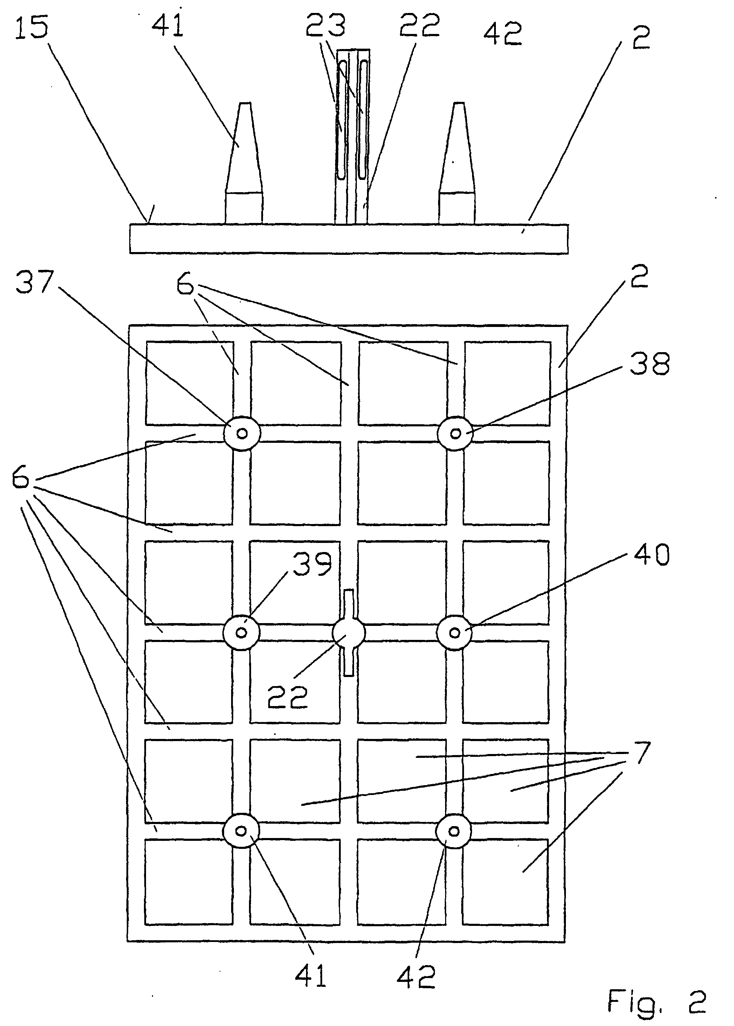

Die in der vorliegenden Ausführungsform verwendeten Werkstückpaletten sind gitterartige Paletten. Die Stäbe 6 des Gitters schließen sich jeweils mit ihren beiden Enden an querverlaufende Stäbe 6 des Gitters an, wie in Fig. 2 gezeigt.

Die taschenartigen Materialausnehmugen 17 des Positionierblocks 16 sind in der Art von einfach zu fertigenden, ineinander übergehenden Nuten ausgebildet. Die Nuten kreuzen sich, damit die gitterartigen Werkstückpaletten 2 in den Positionierblock 16 absenkbar sind. Durch die Zwischenräume 7 zwischen den Stäben 6 des Gitters treten die verbleibenden Bereiche des Positionierblocks 16 hindurch, welche die Positionierfläche 9 ausbilden.

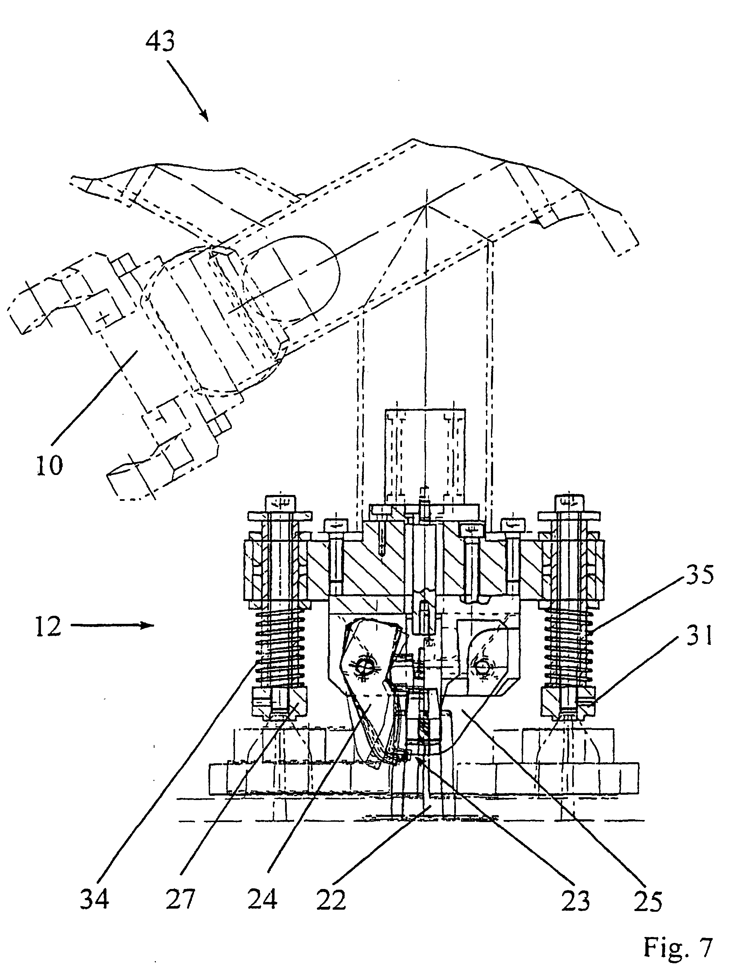

Die Werkstückpaletten 2 haben in der vorliegenden Ausführungsform einen Haltedorn 22 mit einer Hinterschneidung 23, in welche vier jeweils um 90° versetzt angeordnete Tragefinger des Palettengreifers 12 greifen können. In der Schnittdarstellung von Fig. 7 sind nur die beiden Tragefinger 24 und 25 dargestellt. Da sich die Haltedorne 22 ebenso wie die Werkstückpaletten 2 durch eine wechselnde thermische Belastung verziehen können und einer Längenänderung unterworfen sind, sind die Hinterschneidungen 23 der verwendeten Werkstückpaletten, wie in Fig. 2 gezeigt, als Langloch ausgebildet. Die Tragefinger 24 und 25 können in dieses Langloch auch dann problemlos greifen, wenn sich dessen Position ein wenig verändert hat.

Der Palettengreifer 12 ist mit sechs zusätzlichen Stützfingern 26, 27, 28, 29, 30 und 31 versehen, mit welchen die Werkstückpaletten 2 relativ zum Palettengreifer 12 in einer konstruktiv vorgegebenen Förderposition festlegbar sind.

Die Stützfinger 26, 27, 28, 29, 30, 31, 32 und 33 sind jeweils mit einer Feder belastet, von denen die Federn 34 und 35 der Stützfinger 27 und 31 in der Schnittdarstellung von Fig. 7 gezeigt sind. Durch die Federn 34 und 35 drücken die Stützfinger 27 und 31 jeweils auf die Werkstückpalette 2, so daß diese in der vorgegebenen Förderposition festgelegt ist.

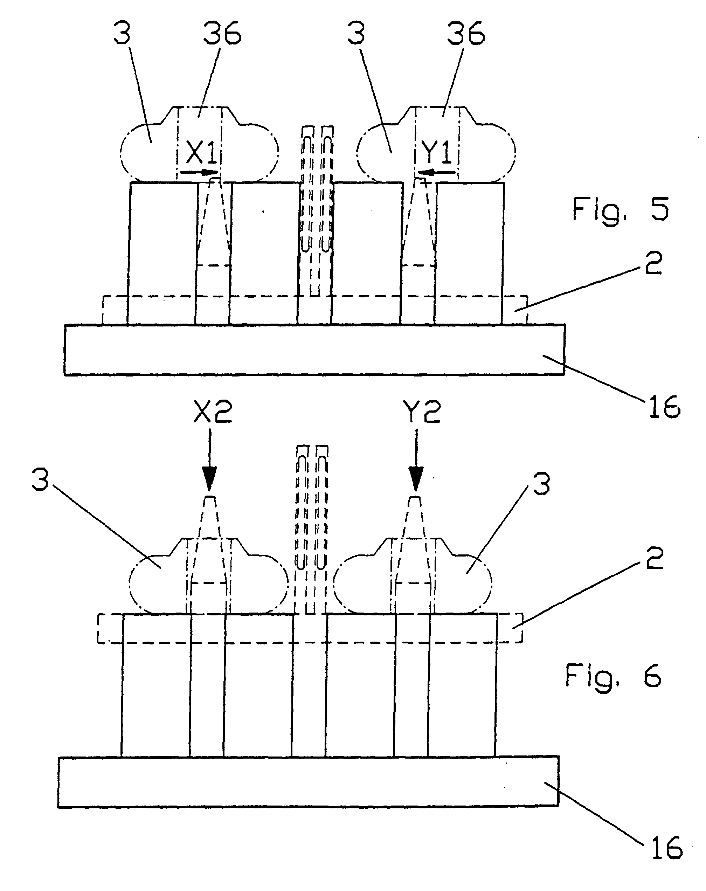

In der vorliegenden Ausführungsform sind Werkstückpaletten 2 mit besonderen Aufnahmebereiche 15 zur Aufnahme von Werkstücken 3, die Löcher 36 aufweisen, vorgesehen. Die Aufnahmebereiche 15 weisen zu diesem Zweck Werkstückaufnahmen 37, 38, 39, 40 , 41 und 42 in Form von Dornen auf. Die Werkstücke können bei der Verwendung solcher Werkstückpaletten präzise in einer vorgegebenen Position auf der Positionierfläche 9 abgelegt werden. Durch Anheben der Werkstückpalette 2 sind die zunächst exzentrisch zu den Dornen positionierten Löcher 36, wie in Fig. 5 durch die Pfeile X1 und Y1 dargestellt, verschiebbar. Sie werden auf den Dornen in die zentrischen Positionen X2 und Y2, wie in Fig. 6 dargestellt verschoben. Würden die empfindlichen Werkstücke 3 stattdessen in der in Fig. 5 gezeigten exzentrischen Position, ohne Zuhilfenahme einer Positionierfläche 9, einfach von einer Handhabungsmaschine auf die Dorne fallengelassen oder auf die Dorne aufgedrückt, so würden sie beschädigt. Eine hohe Ausschußproduktion wäre die Folge.

In der vorliegenden Ausführungsform stützen sich die Stützfinger 26, 27, 28, 29, 30, 31, 32 und 33 gegen 'die freien Enden der zugeordneten Werkstückaufnahmen 37, 38, 39, 40 , 41 und 42 ab.

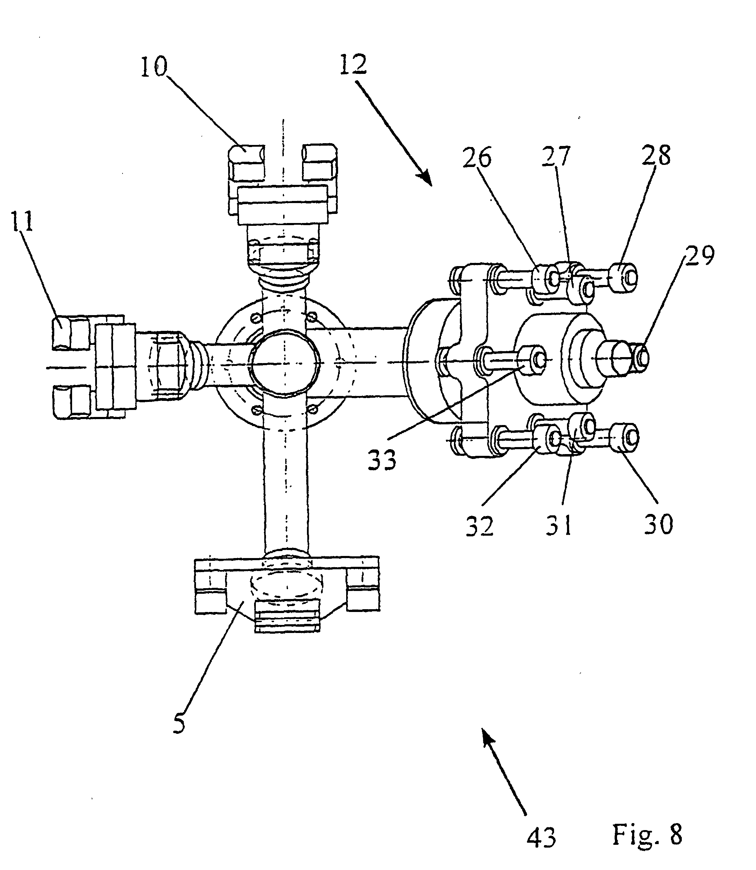

An dem Gelenkarm des Roboters der vorliegenden Ausführungsform ist, wie in Fig. 8 dargestellt, ein Mehrgreiferkopf 43 mit vier Greifern angeordnet. Dabei handelt es sich um zwei Werkstückgreifer 10 und 11, einen Palettengreifer 12 sowie einen Unterpalettengreifer 5.

### Vorrichtung zum automatischen Beladen von Werkstückpaletten

### Bezugszeichenliste

- 1: Vorrichtung
- 2: Werstückpaletten
- 3: Werkstücke
- 4: Gelenkroboter
- 5: Unterpalette
- 6: Stab
- 7: Zwischenraum
- 8: Werkstückpalettenstapel
- 9: Positionierfläche
- 10: Werkstückgreifer
- 11: Werkstückgreifer
- 12: Palettengreifer
- 13: Absenkposition
- 14: Aufnahmeposition
- 15: Aufnahmebereich
- 16: Positionierblock
- 17: Materialausnehmung
- 18: seitliche Wand
- 19: seitliche Wand
- 20: seitliche Wand
- 21: seitliche Wand
- 22: Haltedorn
- 23: Hinterschneidung
- 24: Tragefinger
- 25: Tragefinger
- 26: Stützfinger
- 27: Stützfinger
- 28: Stützfinger
- 29: Stützfinger
- 30: Stützfinger
- 31: Stützfinger
- 32: Stützfinger
- 33: Stützfinger
- 34: Feder
- 35: Feder
- 36: Loch
- 37: Werkstückaufnahme
- 38: Werkstückaufnahme
- 39: Werkstückaufnahme
- 40: Werkstückaufnahme
- 41: Werkstückaufnahme
- 42: Werkstückaufnahme
- 43: Mehrgreiferkopf
- A: seitlicher Abstand
- Z: Zubringereinrichtung
- X1: Pfeil
- X2: Position
- Y1: Pfeil
- Y2: Position

## Patentansprüche

1. Vorrichtung (1) zum automatischen Handhaben von empfindlichen Werkstücken (3), umfassend mindestens eine Werkstückpalette (2) zur Aufnahme der Werkstücke (3) in einem Aufnahmebereich (15), wobei die Werkstückpalette (2) gitter- und/oder kammartig angeordnete vorzugsweise gerade Stäbe (6) und zwischen den Stäben (6) liegende freie Zwischenräume (7) aufweist, mindestens einen Werkstückgreifer (10, 11) zum Ablegen der Werkstücke (3) auf einer dafür vorgesehenen Fläche, und einen Palettengreifer (12) zur Halterung der Werkstückpalette (2), **dadurch gekennzeichnet, daß** wenigstens eine Positioniereinrichtung (16) mit Materialausnehmungen (17) vorgesehen ist, in die die Stäbe (6) der Werkstückpalette (2) absenkbar sind, daß die Positioniereinrichtung (16) eine Positionierfläche (9) zum Ablegen der Werkstücke (3) mittels des Werkstückgreifers (10, 11) aufweist, und daß der Palettengreifer (12) derart ausgebildet ist, daß die leere Werkstückpalette (2) von dem Palettengreifer (12) aus einer oberhalb der leeren Positionierfläche (9) liegenden Absenkposition (13) durch die Ebene der Positionierfläche (9) hindurch in eine unterhalb der Positionierfläche (9) liegende Aufnahmeposition (14) derart absenkbar ist, daß der Aufnahmebereich (15) der Werkstückpalette (2) tiefer liegt als die Positionierfläche (9), und nach dem Ablegen der Werkstücke (3) auf die unter die Positionierfläche (9) abgesenkte werkstückpalette (2) die Werkstückpalette (2) aus der Aufnahmeposition (14) anhebbar ist, so daß die Werkstücke (3) mittels der Werkstückpalette (2) von der Positionierfläche (9) abgehoben werden.

2. Vorrichtung nach Anspruch 1, **dadurch gekennzeichnet, daß** die Positioniereinrichtung (16) als Positionierblock ausgebildet ist, der taschenartige Materialausnehmungen (17) aufweist, und daß die Stäbe (6) der Werkstückpalette (2) in die Materialausnehmungen (17) absenkbar sind.

3. Vorrichtung nach Anspruch 2, **dadurch gekennzeichnet, daß** der Positionierblock (16) aus weichen Material, vorzugsweise aus Kunststoff besteht.

4. Vorrichtung nach Anspruch 2 oder 3, **dadurch gekennzeichnet, daß** die taschenartigen Materialausnehmugen (17) des Positionierblocks (16) in der Art von ineinander übergehenden Nuten ausgebildet sind.

5. Vorrichtung nach einem der Ansprüche 2 bis 4, **dadurch gekennzeichnet, daß** die seitlichen Wände (18, 19, 20, 21) der Materialausnehmungen (17) im wesentlichen parallel zur Absenk- und Anheberichtung der Werkstückpalette (2) angeordnet sind.

6. Vorrichtung nach einem der Ansprüche 2 bis 5, **dadurch gekennzeichnet, daß** die Stäbe (6) der Werkstückpalette (2) allseitig mit einem seitlichen Abstand zu den Wänden (18, 19, 20, 21) der Materialausnehmungen (17) in den Positionierblock (16) absenkbar sind.

7. Vorrichtung zum automatischen Beladen von Werkstückpaletten (2) nach einem der Ansprüche 1 bis 6, wobei die Werkstückpaletten (2) wenigstens einen Haltedorn (22) mit einer Hinterschneidung (23) aufweisen, **dadurch gekennzeichnet, daß** der Palettengreifer (12) wenigstens einen Tragefinger (24, 25) aufweist, mit welchem die Werkstückpalette (2) an der Hinterschneidung (23) greifbar ist.

8. Vorrichtung nach einem der Ansprüche 1 bis 7, **dadurch gekennzeichnet, daß** der Palettengreifer (12) zumindest mit einem zusätzlichen Stützfinger (26, 27, 28, 29, 30 31, 32, 33) versehen ist, mit dem die Werkstückpalette (2) relativ zum Palettengreifer (12) in einer konstruktiv vorgegebenen Förderposition festlegbar ist.

9. Vorrichtung nach Anspruch 8, **dadurch gekennzeichnet, daß** der Stützfinger (26, 27, 28, 29, 30 31, 32, 33) federbelastet ist und auf die Werkstückpalette (2) drückt, so daß diese in der vorgegebenen Förderposition festgelegt ist.

10. Vorrichtung zum automatischen Beladen von Werkstückpaletten (2) nach einem der Ansprüche 1 bis 9, wobei die Aufnahmebereiche (15) der Werkstückpaletten (2) zur Aufnahme gelochter Werkstücke (3) mit Werkstückaufnahmen (37, 38, 39, 40, 41, 42) in Form von Dornen versehen sind, **dadurch gekennzeichnet, daß** die Werkstücke (3) präzise in einer vorgegebenen Position auf der Positionierfläche (9) ablegbar und durch Anheben der Werkstückpalette (2) die Löcher (36) der Werkstücke (3) auf den Dornen der Werkstückpalette (2) positionierbar sind.

11. Vorrichtung nach einem der Ansprüche 9 bis 10, **dadurch gekennzeichnet, daß** der Stützfinger (26, 27, 28, 29, 30 31, 32, 33) sich gegen das freie Ende eines Dornes abstützt.

12. Vorrichtung nach einem der Ansprüche 1 bis 11, **dadurch gekennzeichnet, daß** der Palettengreifer (12) sowie der Werkstückgreifer (10, 11) an einem Portalladesystem angeordnet sind.

13. Vorrichtung nach einem der Ansprüche 1 bis 11, **dadurch gekennzeichnet, daß** der Palettengreifer (12) sowie der Werkstückgreifer (10, 11) an einem Roboter angeordnet sind.

14. Vorrichtung nach Anspruch 13, **dadurch gekennzeichnet, daß** der Roboter ein Gelenkroboter (4) ist, an dessen Gelenkarm ein Mehrgreiferkopf (43) angeordnet ist, und daß der Mehrgreiferkopf (43) zumindest aus zwei Werkstückgreifern (10, 11) sowie einem Palettengreifer (12) besteht.

## Claims

1. Device (1) for automatically handling sensitive workpieces (3), comprising at least one workpiece palette (2) for receiving the workpieces (3) in a receiving region (15), wherein the workpiece palette (2) comprises preferably straight bars (6), which are disposed in a grid- or chamber-like fashion, and free interspaces (7) lying between the bars (6), at least one workpiece gripper (10, 11) for depositing the workpieces (3) on a surface provided for the latter, and a palette gripper (12) for retaining the workpiece palette (2), **characterised in that** at least one positioning appliance (16) is provided with material recesses (17), into which the bars (6) of the workpiece palette (2) can be lowered, that the positioning appliance (16) comprises a positioning surface (9) for depositing the workpieces (3) by means of the workpiece gripper (10, 11), and that the palette gripper (12) is formed such that the empty workpiece palette (2) can be lowered by the palette gripper (12) from a lowering position (13) lying above the empty positioning surface (9) through the plane of the positioning surface (9) into a receiving position (14) lying below the positioning surface (9) such that the receiving region (15) of the workpiece palette (2) lies at a lower level than the positioning surface (9), and, after depositing the workpieces (3) on the workpiece palette (2), which has been lowered beneath the positioning surface (9), the workpiece palette (2) can be lifted out of the receiving position (14), so that the workpieces (3) can be raised from the positioning surface (9) by means of the workpiece palette (2).

2. Device according to Claim 1, **characterised in that** the positioning appliance (16) is formed as a positioning block comprising pocket-like material recesses (17), and that the bars (6) of the workpiece palette (2) can be lowered into the material recesses (17).

3. Device according to Claim 2, **characterised in that** the positioning block (16) consists of non-rigid material, preferably of a plastics material.

4. Device according to Claim 2 or 3, **characterised in that** the pocket-like material recesses (17) of the positioning block (16) are formed like grooves which pass into one another.

5. Device according to any one of Claims 2 to 4, **characterised in that** the lateral walls (18, 19, 20, 21) of the material recesses (17) are disposed substantially parallel to the lowering and lifting appliance of the workpiece palette (2).

6. Device according to any one of Claims 2 to 5, **characterised in that** the bars (6) of the workpiece palette (2) can be lowered into the positioning block (16) with a lateral spacing all-round from the walls (18, 19, 20, 21) of the material recesses (17).

7. Device for automatically loading workpiece palettes (2) according to any one of Claims 1 to 6, wherein the workpiece palettes (2) comprise at least one retaining mandrel (22) with an undercut (23), **characterised in that** the palette gripper (12) comprises at least one carrier finger (24, 25), with which the workpiece palette (2) can be gripped at the undercut (23).

8. Device according to any one of Claims 1 to 7, **characterised in that** the palette gripper (12) is provided at least with one additional support finger (26, 27, 28, 29, 30, 31, 32, 33), with which the workpiece palette (2) can be fixed relative to the palette gripper (12) in a structurally predetermined conveying position.

9. Device according to Claim 8, **characterised in that** the support finger (26, 27, 28, 29, 30, 31, 32, 33) is spring-loaded and presses onto the workpiece palette (2), so that this is fixed in the predetermined conveying position.

10. Device for automatically loading workpiece palettes (2) according to any one of Claims 1 to 9, wherein the receiving regions (15) of the workpiece palettes (2) are provided with workpiece receivers (37, 38, 39, 40, 41, 42) in the form of mandrels to receive perforated workpieces (3), **characterised in that** the workpieces (3) can be precisely deposited in a predetermined position on the positioning surface (9), and the holes (36) in the workpieces (3) can be positioned on the mandrels of the workpiece palette (2) by lifting the workpiece palette (2).

11. Device according to any one of Claims 9 to 10, **characterised in that** the support finger (26, 27, 28, 29, 30, 31, 32, 33) is supported against the free end of a mandrel.

12. Device according to any one of Claims 1 to 11, **characterised in that** the palette gripper (12) and the workpiece gripper (10, 11) are disposed on a portal-type loading system.

13. Device according to any one of Claims 1 to 11, **characterised in that** the palette gripper (12) and the workpiece gripper (10, 11) are disposed on a robot.

14. Device according to Claim 13, **characterised in that** the robot is an articulated robot (4), on the articulated arm of which a multigripper head (43) is disposed, and that the multigripper head (43) consists at least of two workpiece grippers (10, 11) and a palette gripper (12).

## Revendications

1. Dispositif (1) pour manipuler automatiquement des pièces fragiles (3), comprenant au moins une palette de pièces (2) pour déposer les pièces (3) dans un emplacement de réception (15), dans lequel la palette de pièces (2) présente des barres (6), de préférence droites, agencées en forme de grilles et/ou en forme de peignes, et, entre les barres (6), des espaces horizontaux (7) libres, au moins un preneur de pièces (10, 11) pour déposer les pièces (3) sur une surface destinée à cet effet, et un preneur de palettes (12) pour la fixation de la palette de pièces (2), **caractérisé en ce qu'**il est prévu au moins un dispositif de positionnement (16) avec des évidements de matière (17) dans lesquels peuvent être descendues les barres (6) de la palette de pièces (2), que le dispositif de positionnement (16) présente une surface (9) de présentation des pièces (3) en vue de leur dépôt au moyen du preneur de pièces (10, 11) et que le preneur de palettes (12) est conçu de façon que la palette (2) vide puisse être descendue par le preneur de palettes (12), à partir d'une position de descente (13) située au dessus de la surface de présentation (9) vide, en traversant le plan de la surface de présentation (9), dans une position de recueil des pièces (14) située au dessous de la surface de présentation (9), de façon que l'emplacement de réception des pièces (15) sur la palette de pièces (2) vienne à un niveau inférieur à celui de la surface de présentation (9) et qu'après le dépôt des pièces (3) sur la palette de pièces (2) abaissée au dessous de la surface de présentation (9), au moyen de la palette (2), la palette (2) puisse être relevée depuis la position de réception (14) de façon que les pièces (3) puissent alors être évacuées de la surface de présentation (9) au moyen de la palette de pièces (2).

2. Dispositif selon la revendication 1, **caractérisé en ce que** le dispositif de positionnement (16) est conçu comme un bloc de positionnement, présentant des évidements de matière (17) en forme de poches, et que les barres (6) de la palette de pièces (2) peuvent être descendues dans les évidements de matière (17).

3. Dispositif selon la revendication 2, **caractérisé en ce que** le bloc de positionnement (16) est en une matière molle, de préférence en matière plastique.

4. Dispositif selon la revendication 2 ou 3, **caractérisé en ce que** les évidements de matière en forme de poche (17) du bloc de positionnement (16) sont constitués en formes de rainures se confondant.

5. Dispositif selon l'une des revendications 2 à 4, **caractérisé en ce que** les parois latérales (18, 19, 20, 21) des évidements de matière (17) sont disposées pratiquement parallèlement à la direction de descente et de remontée de la palette de pièces (2).

6. Dispositif selon l'une des revendications 2 à 5, **caractérisé en ce que** les barres (6) de la palette de pièces (2) peuvent être descendues de tous les côtés, à une certaine distance des parois (18, 19, 20, 21) des évidements de matière (17) dans le bloc de positionnement (16).

7. Dispositif pour le chargement automatique de palettes de pièces (2) selon l'une des revendications 1 à 6, dans lequel les palettes de pièces (2) comportent au moins un mandrin (22) avec une contre-dépouille (23), **caractérisé en ce que** le preneur de palettes (12) comporte au moins un doigt porteur (24, 25) permettant de saisir la palette de pièces (2) par la contre-dépouille (23).

8. Dispositif selon l'une des revendications 1 à 7, **caractérisé en ce que** le preneur de palettes (12) comporte au moins un doigt de soutien auxiliaire (26, 27, 28, 29 30, 31, 32, 33) avec lequel il est possible de maintenir la palette de pièces (2) dans une position de translation mécaniquement déterminée par rapport au preneur de palette (12).

9. Dispositif selon la revendication 8, **caractérisé en ce que** le doigt de soutien (26, 27, 28, 29 30, 31, 32, 33) est monté sur ressort et appuie sur la palette de pièces (2) de sorte que celle-ci se trouve ainsi maintenue dans la position de translation déterminée.

10. Dispositif pour le chargement automatique de palettes de pièces (2) selon une des revendications 1 à 9, dans lequel les emplacements de réception (15) des palettes de pièces (2) destinés à la réception de pièces perforées (3) comportent des plots de positionnement de pièces (37, 38, 39, 40, 41, 42) en forme de broches, **caractérisé en ce que** les pièces (3) peuvent être déposées de façon précise dans une position déterminée sur la surface de présentation (9), et qu'en relevant la palette (2), les perçages (36) des pièces (3) peuvent se positionner sur les broches de la palette de pièces (2).

11. Dispositif selon une des revendications 9 et 10, **caractérisé en ce que** le doigt de soutien (26, 27, 28, 29 30, 31, 32, 33) prend appui sur l'extrémité libre d'une broche.

12. Dispositif selon l'une des revendications 1 à 11, **caractérisé en ce que** le preneur de palettes (12) ainsi que le preneur de pièces (10, 11) sont disposés sur un système de portique.

13. Dispositif selon l'une des revendications 1 à 11, **caractérisé en ce que** le preneur de palettes (12) ainsi que le preneur de pièces (10, 11) sont fixés sur un robot.

14. Dispositif selon la revendication 13, **caractérisé en ce que** le robot est un robot articulé (4) dont la tête à preneurs multiples (43) est fixée sur le bras articulé, et que la tête à preneurs multiples (43) se compose au moins de deux preneurs de pièces (10, 11) ainsi que d'un preneur de palettes (12).
